# EUROPÄISCHE PATENTSCHRIFT

(11) **EP 2 726 240 B1**
(45) Veröffentlichungstag und Bekanntmachung des Hinweises auf die Patenterteilung: **16.12.2015**
(21) Anmeldenummer: 12759139.4
(22) Anmeldetag: 14.09.2012
(51) Int. Cl.: B23F 23/12, B23F 5/22, B23F 23/04, B23Q 1/01, B23Q 1/26

(54) **WERKZEUGMASCHINE ZUR HERSTELLUNG VON VERZAHNUNGEN AN WERKSTÜCKEN**
MACHINE TOOL FOR MANUFACTURING TOOTHING ON WORKPIECES
MACHINE-OUTIL POUR RÉALISER DES DENTURES SUR DES PIÈCES

(30) Priorität: 16.09.2011 DE 102011082831
(43) Veröffentlichungstag der Anmeldung: 07.05.2014
(73) Patentinhaber: FFG Werke GmbH, 74821 Mosbach (DE)
(72) Erfinder: FLEISCHER, Holger, 09573 Augustusburg (DE); SCHÖNHERR, Carlo, 09573 Leubsdorf (DE)
(74) Vertreter: Rau, Schneck & Hübner Patentanwälte Rechtsanwälte PartGmbB
(86) Internationale Anmeldenummer: PCT/EP2012/068078
(87) Internationale Veröffentlichungsnummer: WO 2013/037947

(56) Entgegenhaltungen:
- DE-A1-102010 028 032
- DE-B- 1 017 885
- DE-B3-102006 019 325
- DE-C- 844 392
- US-A1- 2005 143 236
- US-B1- 6 176 656

## Beschreibung

Die Erfindung betrifft eine Werkzeugmaschine zur Herstellung von Verzahnungen an Werkstücken gemäß dem Oberbegriff des Anspruchs 1.

Aus der DE 10 2006 019 325 B3 (entspricht US 2009/0175696 A1) ist eine Werkzeugmaschine bekannt, die zur Verzahnungsbearbeitung von Werkstücken zwei Werkstückspindeln aufweist. Die Werkstückspindeln sind auf einem Drehhalter angeordnet, der an dem Maschinenbett befestigt und um eine horizontale Schwenkachse rotierbar ist. Seitlich neben den Werkstückspindeln ist ein Werkzeugkopf mit einem darin aufgenommenen Wälzfräser angeordnet, der mittels einer Werkzeug-Positioniereinheit in drei Richtungen relativ zu den Werkstückspindeln linear verfahrbar und um eine horizontale Schwenkachse verschwenkbar ist. Durch die zwei Werkstückspindeln wird eine geringe Nebenzeit bei der Verzahnungsbearbeitung erzielt.

Aus der US 6,176,656 B1 ist ein verschwenkbarer Arbeitstisch bekannt, an dem eine Spritzschutzeinrichtung gelagert ist. Die Spritzschutzeinrichtung ist zusammen mit dem Arbeitstisch verschwenkbar.

Der Erfindung liegt die Aufgabe zugrunde, eine Werkzeugmaschine der gattungsgemäßen Art derart weiterzubilden, dass auf einfache Weise die Bearbeitungsgenauigkeit bei der Werkstückbearbeitung verbessert wird.

Diese Aufgabe wird durch eine Werkzeugmaschine mit den Merkmalen des Anspruchs 1 gelöst. Durch das an dem Schwenkelement angeordnete Lagerelement wird eine zweiseitige Lagerung des Schwenkelements erzielt. Hierzu ist das Lagerelement mit seinem freien Ende um die Werkstückspindel-Schwenkachse verschwenkbar an einem Versteifungselement gelagert, das wiederum zur zweiseitigen Lagerung des Schwenkelements an dem Maschinenbett befestigt ist. Durch die zweiseitige Lagerung des Schwenkelements und der daran angeordneten mindestens zwei Werkstückspindeln wird die Steifigkeit, das thermische Verhalten und die Schwingungsfestigkeit der Werkzeugmaschine bei der Herstellung und/oder Bearbeitung von Verzahnungen an Werkstücken deutlich verbessert, so dass eine höhere Bearbeitungsgenauigkeit erzielbar ist. Insbesondere wird das Schwenkelement mittels des Versteifungselements um die Werkstückspindel-Schwenkachse versteift, so dass bei der Bearbeitung auftretende Kräfte und Schwingungen mittels des Versteifungselements besser aufgenommen und in das Maschinenbett abgeleitet werden können. Vorzugsweise bilden das Maschinenbett, das Schwenkelement mit dem daran angeordneten Lagerelement und das Versteifungselement eine geschlossene Rahmenstruktur bzw. einen geschlossenen Versteifungsrahmen. Durch die zweiseitige Lagerung des Schwenkelements und der daran angeordneten Werkstückspindeln kann somit die Bearbeitungsgenauigkeit verbessert und/oder die Bearbeitungsgeschwindigkeit erhöht werden. Durch die Erhöhung der Bearbeitungsgeschwindigkeit werden geringe Bearbeitungszeiten sowie aufgrund der mindestens zwei Werkstückspindeln geringe Nebenzeiten erzielt. Die Werkzeugmaschine weist somit eine hohe Produktivität auf.

Eine Werkzeugmaschine nach Anspruch 2 gewährleistet eine hohe Bearbeitungsgenauigkeit. Dadurch, dass das Maschinenbett, das Schwenkelement mit dem daran angeordneten Lagerelement und das Versteifungselement einen Versteifungsrahmen bilden, der den Arbeitsraum nach vier Seiten begrenzt, werden bei der Werkstückbearbeitung auftretende Kräfte und Schwingungen auf einfache und zuverlässige Weise in das Maschinenbett abgeleitet.

Eine Werkzeugmaschine nach Anspruch 3 gewährleistet auf einfache Weise eine hohe Bearbeitungsgenauigkeit. Durch die Anordnung der Werkzeug-Positioniereinheit an dem Versteifungselement ist diese ebenfalls zweiseitig gelagert, so dass auftretende Kräfte und Schwingungen bei der Bearbeitung über das Versteifungselement und das Lagerelement in das Maschinenbett abgeleitet werden können. Darüber hinaus ist der Aufbau der Werkzeugmaschine kompakt, wodurch zusätzlich eine hohe Steifigkeit und Bearbeitungsgenauigkeit gewährleistet wird.

Eine Werkzeugmaschine nach Anspruch 4 gewährleistet auf einfache Weise die Ausbildung einer geschlossenen Rahmenstruktur bzw. eines Versteifungsrahmens, wodurch die hohe Bearbeitungsgenauigkeit gewährleistet ist.

Eine Werkzeugmaschine nach Anspruch 5 gewährleistet einen kompakten Aufbau der Werkzeugmaschine, wodurch eine hohe Steifigkeit und Bearbeitungsgenauigkeit erzielt wird. Der schwenkbare Gegenständer ist über den Querträger mit dem fest an dem Maschinenbett befestigten Ständer verbunden und bildet so zusammen mit dem Maschinenbett einen Versteifungsrahmen, der einen Arbeitsraum in Form einer Durchgangsöffnung nach vier Seiten begrenzt. Die Drehachsen der mindestens zwei Werkstückspindeln verlaufen vorzugsweise parallel zu der Werkstückspindel-Schwenkachse bzw. der z-Richtung.

Eine Werkzeugmaschine nach Anspruch 6 gewährleistet auf einfache Weise eine zweiseitige Lagerung des Schwenkelements. Durch die zumindest teilweise rahmenförmige Ausbildung des Versteifungselements bzw. durch die rahmenförmige Ausbildung des Ständers wird bei im Wesentlichen gleicher Steifigkeit der Materialaufwand reduziert und/oder Bauraum für die Werkzeug-Positioniereinheit geschaffen, um diese an dem Versteifungselement bzw. dem Ständer zu lagern. Durch die Werkzeug-Positioniereinheit wird darüber hinaus eine zusätzliche Versteifung erzielt. Bei der Werkzeugmaschine ist insbesondere der Ständer rahmenförmig ausgebildet und die Werkzeug-Positioniereinheit in einer Durchgangsöffnung des Ständers gelagert.

Eine Werkzeugmaschine nach einem der Ansprüche 7 bis 11 ermöglicht auf einfache und schnelle Weise ein Positionieren des Werkzeugkopfes relativ zu den Werkstückspindeln sowie den darin aufgenommenen Werkstücken.

Eine Werkzeugmaschine nach Anspruch 12 gewährleistet durch die zweiseitige Lagerung des Wälzfräsers eine hohe Bearbeitungsgenauigkeit. Dadurch, dass die Werkzeugaufnahme und die Werkzeuggegenaufnahme relativ zueinander linear verfahrbar sind, ist ein einfaches Spannen und Lösen des Wälzfräsers möglich.

Eine Werkzeugmaschine nach Anspruch 13 gewährleistet auf einfache Weise die Bearbeitung von wellenförmigen Werkstücken mit einer hohen Bearbeitungsgenauigkeit. Das Lagerelement ermöglicht die Anordnung von Werkstückgegenaufnahmen konzentrisch zu der Drehachse der jeweils zugehörigen Werkstückspindel, so dass wellenförmige Werkstücke zweiseitig gelagert werden können. Zum Spannen und Lösen der Werkstücke sowie zur Bearbeitung unterschiedlich langer Werkstücke sind die Werkstückgegenaufnahmen vorzugsweise linear verfahrbar an dem Lagerelement angeordnet. Die jeweilige Werkstückgegenaufnahme ist insbesondere in der z-Richtung linear verfahrbar.

Eine Werkzeugmaschine nach Anspruch 14 gewährleistet auf einfache Weise eine hohe Bearbeitungsgenauigkeit bei der Werkstückbearbeitung. Durch die rahmenförmige Ausbildung wird bei im Wesentlichen gleicher Steifigkeit der Materialaufwand reduziert und/oder Bauraum für die Anordnung der Werkstückgegenaufnahmen geschaffen, in dem diese gelagert werden können. Durch die Werkstückgegenaufnahmen wird darüber hinaus eine zusätzliche Versteifung erzielt. Insbesondere der Gegenständer ist rahmenförmig ausgebildet.

Eine Werkzeugmaschine nach Anspruch 15 gewährleistet auf einfache Weise einen automatischen Werkzeugwechsel. Das Lagerelement ermöglicht auf einfache Weise die Anordnung eines Werkzeugmagazins mit nebeneinander und/oder übereinander angeordneten Werkzeughaltern. Durch Drehung des Schwenkelements und des daran angeordneten Lagerelements um beispielsweise 90 ° kann das Werkzeugmagazin dem Werkzeugkopf zugewandt werden, so dass mittels der Werkzeug-Positioniereinheit auf einfache Weise ein automatischer Werkzeugwechsel durchführbar ist.

Weitere Merkmale, Vorteile und Einzelheiten der Erfindung ergeben sich aus der nachfolgenden Beschreibung eines Ausfiihrungsbeispiels. Es zeigen:
- Fig. 1: eine perspektivische Ansicht einer Werkzeugmaschine zur Herstellung von Verzahnungen an Werkstücken,
- Fig. 2: eine Frontansicht der Werkzeugmaschine in Fig. 1,
- Fig. 3: eine Seitenansicht der Werkzeugmaschine in Fig. 1, und
- Fig. 4: eine perspektivische Schnittansicht durch eine Werkzeug-Positioniereinheit der Werkzeugmaschine in Fig. 1.

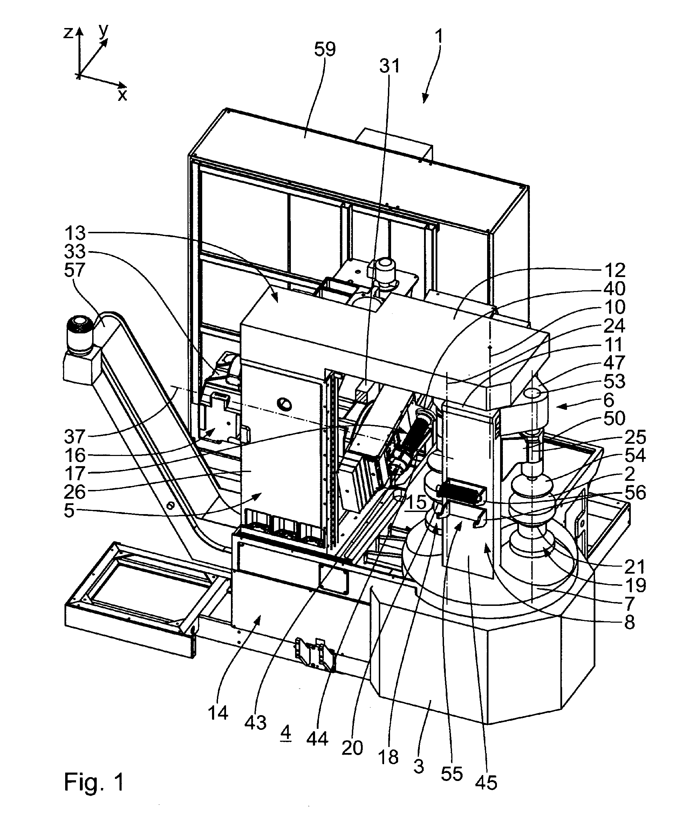

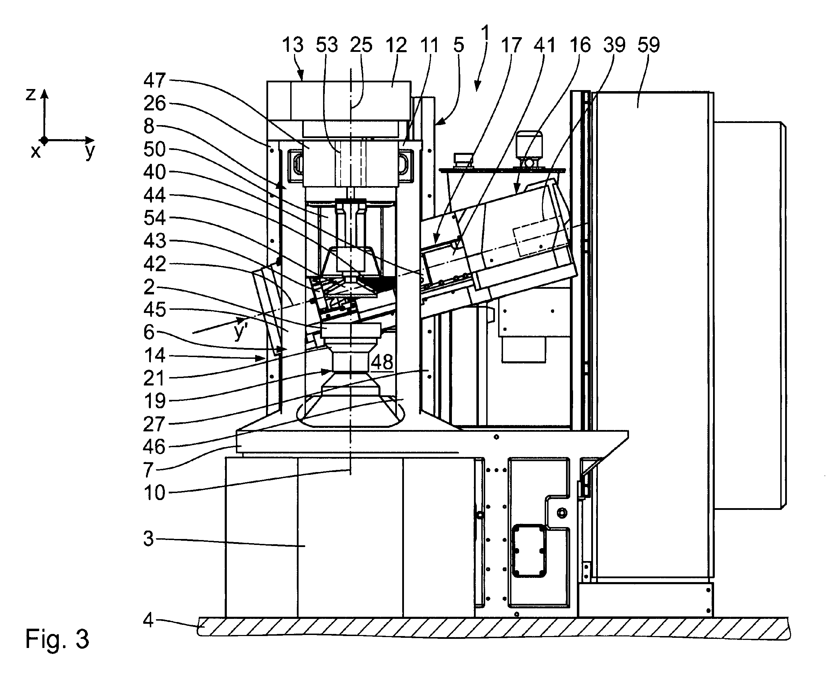

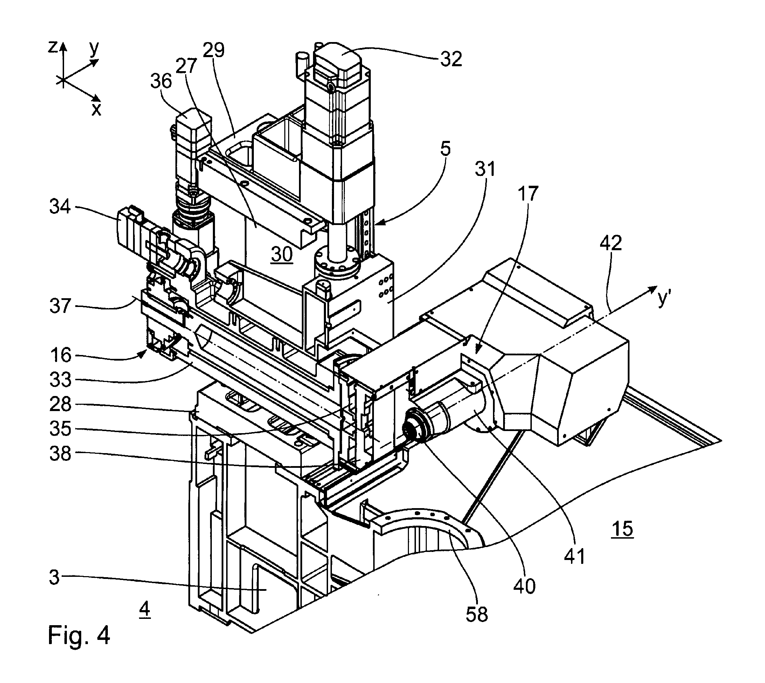

Eine in den Fig. 1 bis 4 dargestellte Werkzeugmaschine 1 dient zur Herstellung und Bearbeitung von Verzahnungen an Werkstücken 2. Die Werkzeugmaschine 1 weist ein Maschinenbett 3 auf, das sich im Wesentlichen in einer horizontalen x-Richtung und einer horizontalen y-Richtung erstreckt. Das Maschinenbett 3 steht auf einer Fundamentplatte 4 und kann daran befestigt werden.

An einem ersten Ende des Maschinenbetts 3 ist ein Ständer 5 befestigt, der sich im Wesentlichen in einer vertikalen z-Richtung erstreckt. An einem gegenüberliegenden zweiten Ende des Maschinenbetts 3 ist ein zugehöriger Gegenständer 6 angeordnet, der durch ein Schwenkelement 7 und ein daran angeordnetes Lagerelement 8 gebildet ist. Das Schwenkelement 7 ist an dem Maschinenbett 3 gelagert und ist mittels eines Antriebsmotors 9 um eine Werkstückspindel-Schwenkachse 10 verschwenkbar. Die Werkstückspindel-Schwenkachse 10 verläuft parallel zu der z-Richtung und ist nachfolgend als c1-Achse bezeichnet. Das Schwenkelement 7 ist um mindestens 180° um die c1-Achse 10 verschwenkbar, vorzugsweise um maximal 360°. Entsprechend zu der c1-Achse 10 ist der Antriebsmotor 9 nachfolgend als c1-Antriebsmotor bezeichnet. Das Schwenkelement 7 wird auch als Schwenk- bzw. Drehhalter oder Spindeltrommel bezeichnet. Die x-, y-und z-Richtung verlaufen jeweils senkrecht zueinander und bilden ein kartesisches Koordinatensystem.

Das Lagerelement 8 erstreckt sich im Wesentlichen in Richtung der c1-Achse 10 und ist fest an dem Schwenkelement 7 befestigt, so dass beide Elemente 7, 8 gemeinsam um die c1-Achse 10 verschwenkbar sind. Das dem Schwenkelement 7 abgewandte freie Ende 11 des Lagerelements 8 ist in einem Querträger 12 gelagert, der im Wesentlichen in der x-Richtung verläuft und mit dem Ständer 5 fest verbunden ist. Der Ständer 5 und der Querträger 12 bilden ein L-förmiges Versteifungselement 13 aus, das mit dem Maschinenbett 3 fest und mit dem Lagerelement 8 drehbar verbunden ist und so das Schwenkelement 7 um die c1-Achse 10 versteift.

Das Maschinenbett 3 bildet zusammen mit dem Schwenkelement 7 und dem daran angeordneten Lagerelement 8 sowie mit dem Versteifungselement 13 einen Versteifungsrahmen 14, der einen Arbeitsraum 15 nach vier Seiten begrenzt. Der Arbeitsraum 15 ist an den zwei von dem Versteifungsrahmen 14 nicht begrenzten Seiten offen. An dem Ständer 5 des Versteifungselements 13 bzw. des Versteifungsrahmens 14 ist eine Werkzeug-Positioniereinheit 16 angeordnet. Die Werkzeug-Positioniereinheit 16 erstreckt sich in den Arbeitsraums 15 und trägt einen Werkzeugkopf 17, der im Arbeitsraum 15 angeordnet ist. Gegenüberliegend zu dem Werkzeugkopf 17 sind zwei Werkstückspindeln 18, 19 an dem Schwenkelement 7 angeordnet. Die Werkstückspindeln 18, 19 sind relativ zu dem Maschinenbett 3 mittels des Schwenkelements 7 um die c1-Achse 10 gemeinsam verschwenkbar. Die Werkstückspindeln 18, 19 weisen zugehörige Werkstückaufnahmen 20, 21 auf, die mittels Antriebsmotoren 22, 23 um zugehörige Drehachsen 24, 25 drehantreibbar sind. Die Werkstückaufnahmen 20, 21 dienen zum Aufnehmen und Spannen eines zu verzahnenden Werkstücks 2. Die Drehachsen 24, 25 verlaufen parallel zu der c1-Achse 10 und der z-Richtung und sind nachfolgend als c2- und c3-Achse bezeichnet. Entsprechend sind die Antriebsmotoren 22, 23 als c2- und c3-Antriebsmotoren bezeichnet.

Zur Lagerung der Werkzeug-Positioniereinheit 16 ist der Ständer 5 rahmenförmig ausgebildet. Hierzu weist der Ständer 5 zwei in der z-Richtung verlaufende Längsstützen 26, 27 und zwei diese verbindende und in der y-Richtung verlaufende Querstützen 28, 29 auf, die eine Durchgangsöffnung 30 begrenzen. An den dem Arbeitsraum 15 zugewandten Stirnseiten der Längsstützen 26, 27 ist ein z1-Schlitten 31 gelagert, der mittels eines z1-Antriebsmotors 32 in der z-Richtung linear verfahrbar ist. An dem z1-Schlitten 31 ist ein x-Schlitten 33 gelagert, der mittels eines x-Antriebsmotors 34 in der x-Richtung linear verfahrbar ist. Der x-Schlitten 33 ist als Pinole ausgebildet und erstreckt sich in die Durchgangsöffnung 30. An dem x-Schlitten 33 ist ein Schwenkteil 35 angeordnet, das mittels eines a-Antriebsmotors 36 um eine Werkzeugkopf-Schwenkachse 37 verschwenkbar ist. Die Werkzeugkopf-Schwenkachse 37 ist nachfolgend auch als a-Achse bezeichnet. An dem Schwenkteil 35 ist ein y-Schlitten 38 gelagert, der mittels eines y-Antriebsmotors 39 in einer y'-Richtung linear verfahrbar ist. Die y'-Richtung verläuft quer zu der x- und z-Richtung. In einer horizontalen Schwenkstellung des y-Schlittens 38 verläuft die y'-Richtung parallel zu der y-Richtung. Je nach Schwenkwinkel des Schwenkteils 35 um die a-Achse 37 verläuft die y'-Richtung in einem spitzen Winkel zu der y-Richtung. An dem y-Schlitten 38 ist der Werkzeugkopf 17 befestigt. Der Werkzeugkopf 17 ist somit relativ zu den Werkstückspindeln 18, 19 in drei Richtungen linear verfahrbar und um die a-Achse 37 verschwenkbar.

Der Werkzeugkopf 17 weist eine Werkzeugaufnahme 40 auf, die mittels eines b-Antriebsmotors 41 um eine Drehachse 42 drehantreibbar ist. Die Drehachse 42 ist auch als b-Achse bezeichnet. Konzentrisch zu der b-Achse 42 ist eine drehbar gelagerte Werkzeuggegenaufnahme 43 angeordnet, die relativ zu der Werkzeugaufnahme 40 linear verfahrbar ist. Das lineare Verfahren der Werkzeuggegenaufnahme 43 erfolgt beispielsweise elektromechanisch oder pneumatisch. In der Werkzeugaufnahme 40 und der Werkzeuggegenaufnahme 43 ist ein Wälzfräser 44 beidseitig gelagert und mittels des b-Antriebsmotors 41 um die b-Achse 42 drehantreibbar. Die b-Achse 42 verläuft parallel zu der y'-Richtung.

Der Gegenständer 6 ist entsprechend zu dem Ständer 5 rahmenförmig ausgebildet. Hierzu weist das Lagerelement 8 zwei in der z-Richtung verlaufende Längsstützen 45, 46 auf, die beabstandet zueinander auf dem Schwenkelement 7 befestigt sind und an dem freien Ende 11 mittels einer Querstütze 47 miteinander verbunden sind. Der Gegenständer 6 bildet auf diese Weise eine Durchgangsöffnung 48 aus. An den Längsstützen 45, 46 sind im Bereich gegenüberliegender Stirnseiten ein z2-Schlitten 49 und ein z3-Schlitten 50 gelagert. Der z2-Schlitten 49 ist mittels einer zugehörigen z2-Antriebseinheit 51 in der z-Richtung linear verfahrbar, so dass eine an dem z2-Schlitten 49 angeordnete Werkstückgegenaufnahme 52 linear verfahrbar ist. Die Werkstückgegenaufnahme 52 ist drehbar und konzentrisch zu der c2-Achse 24 angeordnet. Entsprechend ist der z3-Schlitten 50 mittels einer z3-Antriebseinheit 53 in der z-Richtung linear verfahrbar, so dass eine Werkstückgegenaufnahme 54 relativ zu der Werkstückaufnahme 21 linear verfahrbar ist. Die Werkstückgegenaufnahme 54 ist drehbar und konzentrisch zu der c3-Achse 25 angeordnet. Die Werkstückgegenaufnahmen 52, 54 sind vorzugsweise als Reitstöcke ausgebildet.

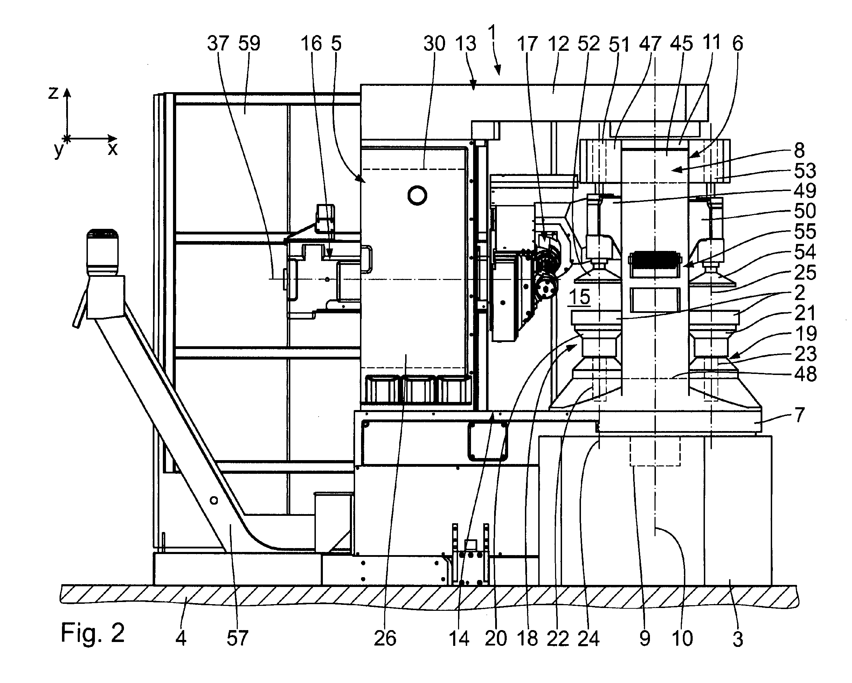

Zum Werkzeugwechsel ist an der Längsstütze 45 ein Werkzeugmagazin 55 angeordnet, das mehrere in der z-Richtung übereinander angeordnete Werkzeughalter 56 für weitere Wälzfräser 44 aufweist. Das Werkzeugmagazin 55 ist lediglich in den Figuren 1 und 2 dargestellt.

Zum Abtransportieren von bei der Werkstückbearbeitung anfallenden Spänen ist ein Späneförderer 57 im Bereich des Maschinenbetts 3 unter einer Fallöffnung 58 angeordnet. Das Maschinenbett 3 ist in Richtung der Fallöffnung 58 zumindest teilweise trichterförmig ausgebildet.

Zur Steuerung der Werkzeugmaschine 1 und der Herstellung und Bearbeitung von Verzahnungen an Werkstücken 2 ist eine Steuereinheit 59 vorgesehen.

Die Funktionsweise der Werkzeugmaschine 1 ist wie folgt:
Zur Herstellung einer Verzahnung an einem Werkstück 2 wird dieses zunächst manuell oder mittels eines Handhabungsgerätes auf der Werkstückaufnahme 20 angeordnet und durch Verfahren des z2-Schlittens 49 mittels der Werkstückgegenaufnalune 52 beidseitig eingespannt. Anschließend wird der Gegenständer 6 um 180° um die c1-Achse 10 verschwenkt, wodurch das Werkstück 2 in den Arbeitsraum 15 gelangt. Durch dieses Verschwenken wird ein in der Werkstückaufnahme 21 und der Werkstückgegenaufnahme 54 gespanntes und fertig bearbeitetes Werkstück 2 aus dem Arbeitsraum 15 befördert und kann nun manuell oder mittels des Handhabungsgeräts entladen werden. Nach dem Entladen kann die Werkstückspindel 19 mit einem neuen zu bearbeitenden Werkstück 2 bestückt werden.

Das in der Werkstückspindel 18 befindliche Werkstück 2 wird zur Verzahnung um die c2-Achse 24 drehangetrieben. Die Verzahnung des Werkstücks 2 erfolgt in üblicher Weise durch Drehantreiben des Wälzfräsers 44 um die b-Achse 42 und durch lineares Verfahren des Wälzfräsers 44 in der x- und z-Richtung sowie ggf. in der y'-Richtung. Zur Herstellung von Schrägverzahnungen wird der Wälzfräser 44 um die a-Achse 37 verschwenkt, so dass die y'-Richtung mit der y-Richtung einen spitzen Winkel einschließt.

Bei der Herstellung und Bearbeitung der Verzahnungen auftretende Kräfte und Schwingungen werden über den Ständer 5 und den Gegenständer 6 in das Maschinenbett 3 abgeleitet. Durch den Querträger 12 wird insbesondere die c1-Achse 10 des Gegenständers 6 sowie die c2-Achse 24 der Werkstückspindel 18 und die c3-Achse 25 der Werkstückspindel 19 versteift, so dass Kräfte und Schwingungen bei der Bearbeitung nicht länger zu einer Auslenkung der c1-Achse 10 und/oder der c2-Achse 24 bzw. der c3-Achse 25 relativ zu der z-Richtung führen. Gleichzeitig wird durch den geschlossenen Versteifungsrahmen 14 auch der Ständer 5 versteift, so dass Kräfte und Schwingungen bei der Bearbeitung nicht die Positioniergenauigkeit der Werkzeug-Positioniereinheit 16 und des daran angeordneten Werkzeugkopfes 17 beeinträchtigen. Durch den geschlossenen Versteifungsrahmen 14 bzw. die geschlossene Rahmenstruktur wird zudem das thermische Verhalten der Werkzeugmaschine 1 sowie das Schwingungsverhalten verbessert. Insbesondere sind bei der Bearbeitung auftretende Schwingungen besser gedämpft bzw. treten überhaupt nicht auf.

Nachdem das Werkstück 2 fertig bearbeitet wurde, wird der Gegenständer 6 erneut um 180° um die c1-Achse 10 verschwenkt, so dass das in der Werkstückspindel 18 befindliche und fertig bearbeitete Werkstück 2 aus dem Arbeitsraum 15 entfernt und das in der Werkstückspindel 19 befindliche und zu bearbeitende Werkstück 2 in dem Arbeitsraum 15 angeordnet wird. Die oben beschriebene Bearbeitung wiederholt sich nun. Dadurch, dass an dem Schwenkelement 7 zwei Werkstückspindeln 18, 19 angeordnet sind, werden kurze Nebenzeiten erzielt. Darüber hinaus kann aufgrund der geschlossenen Rahmenstruktur und der damit verbundenen Steifigkeit die Bearbeitungsgeschwindigkeit der Werkstücke 2 erhöht werden, wodurch die Bearbeitungsdauer bzw. die Hauptzeit verkürzt wird. Insgesamt weist die Werkzeugmaschine 1 eine hohe Produktivität und Bearbeitungsgenauigkeit bei der Verzahnung von Werkstücken 2 auf.

Weiterhin ermöglicht die Werkzeugmaschine 1 auf einfache Weise einen vollautomatischen Werkzeugwechsel. In dem Werkzeugmagazin 55 wird mindestens ein neuer Wälzfräser 44 und ein Leerplatz bzw. ein leerer Werkzeughalter 56 für einen Werkzeugwechsel vorgehalten. Zum Werkzeugwechsel wird der Gegenständer 6 ausgehend von der beschriebenen Bearbeitungsposition um 90° um die c1-Achse 10 verschwenkt, so dass das Werkzeugmagazin 55 im Arbeitsraum 15 angeordnet wird. Der in dem Werkzeugkopf 17 gespannte und verschlissene Wälzfräser 44 wird anschließend um die a-Achse 37 derart ausgerichtet, dass die b-Achse 42 parallel zu der y-Richtung verläuft. Der verschlissene Wälzfräser 44 wird nun durch Verfahren in der x- und z-Richtung in einem freien Werkzeughalter 56 abgelegt und die Werkzeugaufnahme 40 sowie die Werkzeuggegenaufnahme 43 gelöst. Durch Verfahren der Werkzeuggegenaufnahme 43 und/oder des y-Schlittens 38 wird der verschlissene Wälzfräser 44 aus dem Werkzeugkopf 17 entfernt. Hierzu kann der verschlissene Wälzfräser 44 gegebenenfalls in dem Werkzeughalter 56 geklemmt werden. Anschließend wird der Werkzeugkopf 17 durch Verfahren in der x- und z-Richtung zu dem neuen Wälzfräser 44 verfahren. Durch Verfahren der Werkzeuggegenaufnahme 43 in y-Richtung wird der neue Wälzfräser 44 in die Werkzeugaufnahme 40 geschoben und in dieser sowie in der Werkzeuggegenaufnahme 43 gespannt. Anschließend wird der neue Wälzfräser 44 durch Verfahren in der z-Richtung aus dem Werkzeughalter 56 entfernt und durch Verfahren in der x-Richtung zu dem Ständer 5 verfahren. Durch ein erneutes Verschwenken des Gegenständers 6 um 90° wird nun ein zu bearbeitendes Werkstück 2 in dem Arbeitsraum 15 angeordnet. Der vollautomatische Werkzeugwechsel ist nun beendet, so dass die Verzahnung von Werkstücken 2 fortgeführt werden kann.

Während der Bearbeitung von Werkstücken 2 kann der verschlissene Wälzfräser 44 manuell oder mittels eines Handhabungsgeräts aus dem Werkzeughalter 56 entfernt und durch einen neuen Wälzfräser 44 ersetzt werden. Durch den automatischen Werkzeugwechsel werden lange bedienerlose Maschinenzeiten erreicht, wodurch die Produktivität der Werkzeugmaschine 1 nochmals erhöht wird. Zudem können durch einen manuellen Werkzeugwechsel verursachte Probleme, wie beispielsweise undefinierte Stillstandszeiten, Qualitätsschwankungen beim Werkzeugwechsel und arbeitsphysiologische Belastungen des Bedieners vermieden werden. Der maschinentechnische Aufwand für den automatischen Werkzeugwechsel ist gering.

Zur Durchführung weiterer Bearbeitungsschritte kann auf dem Maschinengestell 3 ein weiterer Ständer angeordnet sein, der mittels des Querträgers 12 versteift ist und einen Teil des Versteifungselements 13 bildet. An diesem Ständer können mittels weiterer Werkzeug-Positioniereinheiten weitere Werkzeuge angeordnet sein, die beispielsweise zum Entgraten und/oder Anfasen der Werkstücke 2 dienen.

## Patentansprüche

1. Werkzeugmaschine zur Herstellung von Verzahnungen an Werkstücken, umfassend
- ein Maschinenbett (3),
- ein Schwenkelement (7) mit mindestens zwei daran angeordneten Werkstückspindeln (18, 19), wobei die mindestens zwei Werkstückspindeln (18, 19)
-- relativ zu dem Maschinenbett (3) um eine Werkstückspindel-Schwenkachse (10) des Schwenkelements (7) verschwenkbar sind und
-- jeweils eine um eine Drehachse (24, 25) drehantreibbare Werkstückaufnahme (20, 21) für ein zu verzahnendes Werkstück (2) aufweisen,
- eine Werkzeug-Positioniereinheit (16) mit einem daran angeordneten Werkzeugkopf (17), wobei der Werkzeugkopf (17)
-- relativ zu den mindestens zwei Werkstückspindeln (18, 19) in drei Richtungen linear verfahrbar ist und
-- um eine Werkzeugkopf-Schwenkachse (37) verschwenkbar ist,
**dadurch gekennzeichnet, dass**
- ein sich in Richtung der Werkstückspindel-Schwenkachse (10) erstreckendes Lagerelement (8) fest an dem Schwenkelement (7) angeordnet ist,
- ein freies Ende (11) des Lagerelements (8) um die Werkstückspindel-Schwenkachse (10) verschwenkbar an einem Versteifungselement (13) gelagert ist, und
- das Versteifungselement (13) an dem Maschinenbett (3) befestigt ist.

2. Werkzeugmaschine nach Anspruch 1, **dadurch gekennzeichnet, dass** das Maschinenbett (3) zusammen mit dem Schwenkelement (7) und dem daran angeordneten Lagerelement (8) sowie dem Versteifungselement (13) einen Versteifungsrahmen (14) bildet, der nach vier Seiten einen Arbeitsraum (15) begrenzt.

3. Werkzeugmaschine nach Anspruch 1 oder 2, **dadurch gekennzeichnet, dass** die Werkzeug-Positioniereinheit (16) an dem Versteifungselement (13) gelagert ist.

4. Werkzeugmaschine nach einem der Ansprüche 1 bis 3, **dadurch gekennzeichnet, dass** das Versteifungselement (13) L-förmig ausgebildet ist und einen fest an dem Maschinenbett (3) befestigten und sich in einer vertikalen z-Richtung erstreckenden Ständer (5) sowie einen den Ständer (5) mit dem Lagerelement (8) verbindenden Querträger (12) aufweist.

5. Werkzeugmaschine nach einem der Ansprüche 1 bis 4, **dadurch gekennzeichnet, dass** die Werkstückspindel-Schwenkachse (10) in einer vertikalen z-Richtung verläuft und das Schwenkelement (7) zusammen mit dem Lagerelement (8) einen schwenkbaren Gegenständer (6) bildet.

6. Werkzeugmaschine nach einem der Ansprüche 1 bis 5, **dadurch gekennzeichnet, dass** das Versteifungselement (13) zumindest teilweise rahmenförmig ausgebildet ist.

7. Werkzeugmaschine nach einem der Ansprüche 4 bis 6, **dadurch gekennzeichnet, dass** an dem Ständer (5) ein z-Schlitten (31) angeordnet ist, der mittels eines z-Antriebsmotors (32) in der z-Richtung linear verfahrbar ist.

8. Werkzeugmaschine nach Anspruch 7, **dadurch gekennzeichnet, dass** an dem z-Schlitten (31) ein x-Schlitten (33) angeordnet ist, der mittels eines x-Antriebsmotors (34) in einer horizontalen x-Richtung linear verfahrbar ist.

9. Werkzeugmaschine nach Anspruch 8, **dadurch gekennzeichnet, dass** an dem x-Schlitten (33) ein Schwenkteil (35) angeordnet ist, das mittels eines a-Antriebsmotors (36) um die parallel zu der x-Richtung verlaufende Werkzeugkopf-Schwenkachse (37) verschwenkbar ist.

10. Werkzeugmaschine nach Anspruch 9, **dadurch gekennzeichnet, dass** an dem Schwenkteil (35) ein y-Schlitten (38) angeordnet ist, der mittels eines y-Antriebsmotors (39) quer zu der x- und z-Richtung linear verfahrbar ist.

11. Werkzeugmaschine nach Anspruch 10, **dadurch gekennzeichnet, dass** an dem y-Schlitten (38) der Werkzeugkopf (17) angeordnet ist.

12. Werkzeugmaschine nach einem der Ansprüche 1 bis 11, **dadurch gekennzeichnet, dass** der Werkzeugkopf (17) eine drehantreibbare Werkzeugaufnahme (40) und eine drehbare Werkzeuggegenaufnahme (43) für einen Wälzfräser (44) aufweist, die zum Spannen und Lösen des Wälzfräsers (44) relativ zueinander linear verfahrbar sind.

13. Werkzeugmaschine nach einem der Ansprüche 1 bis 12, **dadurch gekennzeichnet, dass** an dem Lagerelement (8) jeweils eine drehbare Werkstückgegenaufnahme (52, 54) konzentrisch zu der Drehachse (24, 25) der zugehörigen Werkstückspindel (18, 19) angeordnet ist.

14. Werkzeugmaschine nach einem der Ansprüche 1 bis 13, **dadurch gekennzeichnet, dass** das Lagerelement (8) zusammen mit dem Schwenkelement (7), rahmenförmig ausgebildet ist.

15. Werkzeugmaschine nach einem der Ansprüche 1 bis 14, **dadurch gekennzeichnet, dass** an dem Lagerelement (8) ein Werkzeugmagazin (55) angeordnet ist.

## Claims

1. Machine tool for producing toothed sections on workpieces, comprising
- a machine bed (3),
- a pivoting element (7) with at least two workpiece spindles (18, 19) arranged thereon, wherein the at least two workpiece spindles (18, 19)
-- are pivotable relative to the machine bed (3) about a workpiece spindle pivot axis (10) of the pivoting element (7) and
-- in each case have a workpiece receiver (20, 21) that is rotatably drivable about a rotational axis (24, 25) for a workpiece (2) to be toothed,
- a tool positioning unit (16) with a tool head (17) arranged thereon, wherein the tool head (17)
-- is linearly movable relative to the at least two workpiece spindles (18, 19) in three directions and
-- is pivotable about a tool head pivot axis (37),
**characterized in that**
- a bearing element (8) extending in the direction of the workpiece spindle pivot axis (10) is rigidly arranged on the pivoting element (7),
- a free end (11) of the bearing element (8) is pivotably mounted about the workpiece spindle pivot axis (10) on a reinforcing element (13), and
- the reinforcing element (13) is fastened to the machine bed (3).

2. Machine tool according to claim 1, **characterized in that** the machine bed (3), together with the pivoting element (7) and the bearing element (8) arranged thereon as well as the reinforcing element (13), forms a reinforcing frame (14), which limits a working space (15) to four sides.

3. Machine tool according to claim 1 or 2, **characterized in that** the tool positioning unit (16) is mounted on the reinforcing element (13).

4. Machine tool according to any one of claims 1 to 3, **characterized in that** the reinforcing element (13) is L-shaped and has a stand (5), which is rigidly fastened to the machine bed (3) and extends in a vertical z-direction, as well as a cross member (12) connecting the stand (5) to the bearing element (8).

5. Machine tool according to any one of claims 1 to 4, **characterized in that** the workpiece spindle pivot axis (10) runs in a vertical z-direction and the pivoting element (7), together with the bearing element (8), forms a pivotable counter-stand (6).

6. Machine tool according to any one of claims 1 to 5, **characterized in that** the reinforcing element (13) is a least partially frame-shaped.

7. Machine tool according to any one of claims 4 to 6, **characterized in that** a z-slide (31), which is linearly movable in the z-direction by means of a z-drive motor (32), is arranged on the stand (5).

8. Machine tool according to claim 7, **characterized in that** an x-slide (33), which is linearly movable in a horizontal x-direction by means of an x-drive motor (34), is arranged on the z-slide (31).

9. Machine tool according to claim 8, **characterized in that** a pivoting part (35), which is pivotable by means of an a-drive motor (36) about the tool head pivot axis (37) running parallel to the x-direction, is arranged on the x-slide (33).

10. Machine tool according to claim 9, **characterized in that** a y-slide (38), which is linearly movable transverse to the x- and z-direction by means of a y-drive motor (39), is arranged on the pivoting part (35).

11. Machine tool according to claim 10, **characterized in that** the tool head (17) is arranged on the y-slide (38).

12. Machine tool according to any one of claims 1 to 11, **characterized in that** the tool head (17) has a rotatably drivable tool receiver (40) and a rotatable tool counter-receiver (43) for a hob (44), which are linearly movable relative to one another to clamp and release the hob (44).

13. Machine tool according to any one of claims 1 to 12, **characterized in that** a rotatable workpiece counter-receiver (52, 54) is in each case arranged concentrically with respect to the rotational axis (24, 25) of the associated workpiece spindle (18, 19) on the bearing element (8).

14. Machine tool according to any one of claims 1 to 13, **characterized in that** the bearing element (8) together with the pivoting element (7) is frame-shaped.

15. Machine tool according to any one of claims 1 to 14, **characterized in that** a tool magazine (55) is arranged on the bearing element (8).

## Revendications

1. Machine-outil servant à fabriquer des dentures sur des pièces à usiner, comprenant :
- un banc de machine (3),
- un élément de pivotement (7) pourvu au moins de deux broches de pièce à usiner (18, 19) disposées au niveau dudit élément de pivotement, sachant que les deux broches de pièce à usiner (18, 19) ou plus
-- peuvent être pivotées par rapport au banc de machine (3) autour d'un axe de pivotement de broche de pièce à usiner (10) de l'élément de pivotement (7) et
-- présentent respectivement un porte-pièce à usiner (20, 21) pouvant être entraîné en rotation autour d'un axe de rotation (24, 25) pour une pièce à usiner (2) à denter,
- une unité de positionnement d'outil (16) pourvue d'une tête d'outil (17) disposée au niveau de ladite unité de positionnement d'outil, sachant que la tête d'outil (17)
-- peut être déplacée de manière linéaire dans trois directions par rapport aux deux broches de pièce à usiner (18, 19) ou plus et
-- peut être pivotée autour d'un axe de pivotement de tête d'outil (37),
**caractérisée en ce**
- **qu'**un élément formant palier (8) s'étendant dans la direction de l'axe de pivotement de broche de pièce à usiner (10) est disposé de manière solidaire au niveau de l'élément de pivotement (7),
- en ce qu'une extrémité (11) libre de l'élément formant palier (8) est logée au niveau d'un élément de raidissement (13) de manière à pouvoir pivoter autour de l'axe de pivotement de broche de pièce à usiner (10), et
- en ce que l'élément de raidissement (13) est fixé au niveau du banc de machine (3).

2. Machine-outil selon la revendication 1, **caractérisée en ce que** le banc de machine (3) forme, conjointement avec l'élément de pivotement (7) et l'élément formant palier (8) disposé au niveau de l'élément de pivotement ainsi qu'avec l'élément de raidissement (13), un cadre de raidissement (14), qui délimite un espace de travail (15) vers quatre côtés.

3. Machine-outil selon la revendication 1 ou 2, **caractérisée en ce que** l'unité de positionnement d'outil (16) est logée au niveau de l'élément de raidissement (13).

4. Machine-outil selon l'une quelconque des revendications 1 à 3, **caractérisée en ce que** l'élément de raidissement (13) est réalisé de manière à présenter une forme en L et présente un montant (5) fixé de manière solidaire au niveau du banc de machine (3) et s'étendant dans une direction z verticale ainsi qu'une traverse transversale (12) reliant le montant (5) à l'élément formant palier (8).

5. Machine-outil selon l'une quelconque des revendications 1 à 4, **caractérisée en ce que** l'axe de pivotement de broche de pièce à usiner (10) s'étend dans une direction z verticale, et **en ce que** l'élément de pivotement (7) forme, conjointement avec l'élément formant palier (8), un montant complémentaire (6) pouvant pivoter.

6. Machine-outil selon l'une quelconque des revendications 1 à 5, **caractérisée en ce que** l'élément de raidissement (13) est réalisé au moins en partie de manière à présenter une forme de cadre.

7. Machine-outil selon l'une quelconque des revendications 4 à 6, **caractérisée en ce qu'**un chariot z (31) est disposé au niveau du montant (5), lequel peut être déplacé de manière linéaire dans la direction z au moyen d'un moteur d'entraînement z (32).

8. Machine-outil selon la revendication 7, **caractérisée en ce qu'**un chariot x (33) est disposé au niveau du chariot z (31), lequel peut être déplacé de manière linéaire dans une direction x horizontale au moyen d'un moteur d'entraînement x (34).

9. Machine-outil selon la revendication 8, **caractérisée en ce qu'**une pièce de pivotement (35) est disposée au niveau du chariot x (33), laquelle peut pivoter au moyen d'un moteur d'entraînement a (36) autour de l'axe de pivotement de tête d'outil (37) s'étendant de manière parallèle par rapport à la direction x.

10. Machine-outil selon la revendication 9, **caractérisée en ce qu'**un chariot y (38) est disposé au niveau de la pièce de pivotement (35), lequel peut être déplacé de manière linéaire au moyen d'un moteur d'entraînement y (39) de manière transversale par rapport à la direction x et à la direction z.

11. Machine-outil selon la revendication 10, **caractérisée en ce que** la tête d'outil (17) est disposée au niveau du chariot y (38).

12. Machine-outil selon l'une quelconque des revendications 1 à 11, **caractérisée en ce que** la tête d'outil (17) présente un porte-outil (40) pouvant être entraîné en rotation et un porte-outil complémentaire (43) pouvant tourner pour une fraise-mère développante (44), lesquels peut être déplacés de manière linéaire l'un par rapport à l'autre aux fins du serrage et du desserrage de la fraise-mère développante (44).

13. Machine-outil selon l'une quelconque des revendications 1 à 12, **caractérisée en ce que** respectivement un porte-pièce à usiner complémentaire (52, 54) est disposé de manière concentrique par rapport à l'axe de rotation (24, 25) de la broche de pièce à usiner (18, 19) associée au niveau de l'élément formant palier (8).

14. Machine-outil selon l'une quelconque des revendications 1 à 13, **caractérisée en ce que** l'élément formant palier (8) est réalisé, conjointement avec l'élément de pivotement (7), de manière à présenter une forme de cadre.

15. Machine-outil selon l'une quelconque des revendications 1 à 14, **caractérisée en ce qu'**un magasin d'outils (55) est disposé au niveau de l'élément formant palier (8).
